Europäisches Patentamt

European Patent Office

Office européen des brevets

(11) Veröffentlichungsnummer: **0 265 843**
**A2**

(19)

(12) **EUROPÄISCHE PATENTANMELDUNG**

(21) Anmeldenummer: 87115486.0

(22) Anmeldetag: 22.10.87

(51) Int. Cl.⁴ **B29C 41/18** , B29C 35/08 ,
//B29C53/82,B29K67:00,B29L2-
2:00

(30) Priorität: 29.10.86 DE 3636755

(43) Veröffentlichungstag der Anmeldung:
04.05.88 Patentblatt 88/18

(84) Benannte Vertragsstaaten:
DE ES FR GB IT

(71) Anmelder: BASF Aktiengesellschaft
Carl-Bosch-Strasse 38
D-6700 Ludwigshafen(DE)

(72) Erfinder: Scholz, Dankmar
Heidelberger Ring 31
D-6710 Frankenthal(DE)

(54) **Verfahren zur Herstellung von Hohlkörpern.**

(57) Die Erfindung betrifft ein Verfahren zur Herstellung von Hohlkörpern, bei dem man ein lichthärtbares Harz in eine lichtdurchlässige Form einfüllt, die Form bestrahlt bis das Harz in der gewünschten Schichtdicke polymerisiert ist, das restliche Harz ausfließen läßt und die anpolymerisierte Schicht aushärtet. Die Hohlkörper eignen sich insbesondere als verlorene Kerne bei der Herstellung von Kunststoffbehältern nach dem Wickelverfahren.

EP 0 265 843 A2

## Verfahren zur Herstellung von Hohlkörpern

Die Erfindung betrifft ein Verfahren zur Herstellung von Hohlkörpern aus lichthärtbaren Polyesterharzen, sowie deren Verwendung als verlorener Kern bei der Herstellung von Kunststoffbehältern nach dem Wickelverfahren.

Das Wickelverfahren zur Herstellung von Rohren ist bekannt. Dabei werden Faserstränge oder -bänder mit einem Reaktionsharz getränkt und auf eine rotierende zylindrische Form gewickelt. Nach dem Aushärten des Harzes wird die Form aus dem fertigen Rohr entfernt. Dies ist bei sphärischen Körpern, z.B. Kugeln oder zylindrischen Behältern mit angewickeltem Boden nicht möglich. In diesen Fällen hat man bisher Formen verwendet, die aus Salzen, Wachsen oder anderen Stoffen bestehen, welche nach der Fertigstellung der Wickelstruktur und Aushärtung des Harzes herausgelöst oder ausgeschmolzen wurden. Diese Methode ist jedoch recht aufwendig, da jedes Mal eine neue Form hergestellt werden muß. Eine andere Möglichkeit besteht darin, einen dünnwandigen Hohlkörper aus thermoplastischem Kunststoff im Blasverfahren herzustellen und als verlorenen Kern ("liner") zu verwenden. Thermoplaste haben jedoch den Nachteil, daß sie von vielen organischen Lösungsmitteln aufgelöst oder zumindest angequollen werden und meist eine verhältnismäßig geringe Temperaturbeständigkeit aufweisen.

Der Erfindung lag daher die Aufgabe zugrunde, auf einfache Weise herstellbare Hohlkörper aus Polyesterharzen bereitzustellen, die z.B. als verlorener Kern beim Wickelverfahren verwendet werden können.

Diese Aufgabe wird durch das erfindungsgemäße Verfahren gelöst.

Als lichthärtbare Harze sind die üblichen Polyester-und Vinylesterharze geeignet. Polyesterharze sind Lösungen von ungesättigten Polyestern in copolymerisierbaren Monomeren, Vinylesterharze sind Umsetzungsprodukte von Polyepoxiden mit ungesättigten Monocarbonsäuren. Beide Harztypen sind ausführlich in der EP-C-7086 beschrieben, wo sich auch eine Beschreibung der bevorzugten Acylphosphinoxid-Photoinitiatoren findet. Außer diesen können auch andere übliche Photoinitiatoren, wie Benzilketale, Benzoinether und -ester, aromatische Disulfide, sowie Diacylphosphinoxide eingesetzt werden. Die lichthärtbaren Harze enthalten vorzugsweise 0,01 bis 3 Gew.-% Photoinitiator. In einer bevorzugten Ausführungsform, bei der die Aushärtung der anpolymerisierten Schicht thermisch erfolgt, enthält das lichthärtbare Harz zusätzlich Radikalinitiatoren, wie z.B Peroxide, Hydroperoxide, Percarbonate, C-C-labile Verbindungen, Dialkyl-und Diacylperoxide, vorzugsweise in Mengen von 0,05 bis 1 Gew.-%. Ferner können, je nach Anwendungszweck der Hohlkörper, weitere übliche Zusatzstoffe, wie Inhibitoren, Lichtstabilisatoren, Paraffine, Gleitmittel, transparente Farb-, Füll-und Verstärkungsmittel enthalten sein..

Das flüssige Harz wird in eine lichtdurchlässige Form eingefüllt, die zweckmäßigerweise ganz vollgefüllt wird. Die Formen können z.B. aus Glas, glasfaserverstärkten ungesättigten Polyesterharzen oder thermoplastischen Kunststoffen, wie Polyethylen, Polypropylen, Polymethylmethacrylat oder Polycarbonat bestehen. Wesentlich ist, daß die Materialien für das Licht, mit dem die Bestrahlung durchgeführt wird, durchlässig sind.

Die Form wird dann von außen allseitig und möglichst gleichmäßig bestrahlt. Durch geeignete Anordnung von Lampen kann eine gleichmäßige Strahlungsintensität erreicht werden. Bei der Herstellung von rotationssymmetrischen Hohlkörpern läßt man die mit dem lichthärtbaren Harz gefüllte Form langsam in einem gekrümmten Lampenfeld rotieren. Bei asymmetrisch geformten Körpern ist es zweckmäßig, das Lampenfeld um den Formkörper rotieren zu lassen. Grundsätzlich gilt: je größer der Abstand von der Strahlungsquelle zu der Form, desto gleichmäßiger ist die Bestrahlung. Durch Abdecken von Teilbereichen der Form kann verhindert werden, daß an diesen Bereichen eine Härtung erfolgt. Auf diese Weise können gezielt z.B. Löcher oder Schlitze am Hohlkörper vorgesehen werden. Die Intensität und Dauer der Bestrahlung richtet sich nach der gewünschten Wanddicke des Hohlkörpers, die in weiten Grenzen zwischen 1 mm und 10 cm liegen kann, bei der Herstellung von verlorenen Kernen sind Wanddicken von 1 bis 10 mm bevorzugt. Die Bestrahlungsdauer beträgt zweckmäßigerweise 10 sec bis 10 min.

Danach läßt man das nicht polymerisierte, noch flüssige Harz aus der Form auslaufen, was durch ein an geeigneter Stelle an der Form angebrachtes Ventil geschehen kann. Dieser Harz kann für die Herstellung eines weiteren Hohlkörpers wiederverwendet werden.

Die anpolymerisierte Schicht wird dann durch weiteres Bestrahlen oder thermisch mittels Radikalinitiatoren ausgehärtet. Dabei wird vorzugsweise ein inertes Gas in den Hohlkörper eingefüllt, wodurch eine klebfreie innere Oberfläche des Hohlkörpers erhalten wird. Ein eventuelles Schwinden des aushärtenden Polyesterharzes ist dabei unschädlich. Der Hohlkörper kann bei der Aushärtung unbehindert nach innen schwinden, so daß praktisch spannungsfreie Formteile entstehen.

Schließlich wird die - vorzugsweise zwei-oder mehrteilige - Form entfernt und der fertige Hohlkörper kann entnommen werden.

Die erfindungsgemäß hergestellten Hohlkörper können beliebige Gestalt haben, z.B. Kugel, Kegel, Rohre oder Zylinder mit abgeschlossenen runden Enden.

Sie können direkt als Behälter, z.B. Flaschen, Schalen oder Kästen, als Ziergegenstände, z.B. Vasen, als Formen zum Einbetten von elektronischen Bauteilen und vor allem als verlorene Kerne bei der Herstellung von Kunststoffhohlkörpern verwendet werden. Bei diesem an sich bekannten Verfahren werden Faserstränge oder -bände mit einem Kunststoff getränkt und auf einen rotierenden Kern gewickelt. Statt dieses Wickelverfahrens können auch andere übliche Verfahren, sie das Injektionsverfahren, das Preßverfahren oder Handverfahren angewandt werden. Anschließend wird gegebenenfalls der Kunststoff gehärtet. Als Kunststoffe können dabei wiederum Polyester-und Vinylesterharze sowie Epoxidharze verwendet werden. Man kann jedoch auch thermoplastische Kunststoffe verwenden, wobei dann die Tränkung aus der Schmelze aus Lösung in einem geeigneten Lösungsmittel erfolgt. Die getränkten Faserstränge können heiß auf den Kern gewickelt werden, da der Kern aus duroplastischem Kunststoff auch in der Hitze formstabil bleibt.

Auf diese Weise lassen sich faserverstärkte Hohlkörper, wie Behälter, Rohre, Rohrkrümmer, Rohrverzweigungen und Rohr-T-Stücke herstellen. Der verlorene Kern aus duroplastischem Kunststoff wirkt als innere Schutzschicht oder der Chemie-Schutzschicht bei Rohren und zusammengesetzten zylindrischen Behältern.

**Ansprüche**

1. Verfahren zur Herstellung von Hohlkörpern aus lichthärtbaren Harzen, dadurch gekennzeichnet, daß man lichthärtbares Polyesterharz oder Vinylesterharz in eine lichtdurchlässige Form einfüllt, die Form von außen möglichst allseitig und gleichmäßig so lange bestrahlt, bis das Harz, ausgehend von der Formwand, in der gewünschten Schichtdicke polymerisiert ist, das verbleibende nicht polymerisierte, noch flüssige Harz aus der Form ausfließen läßt, die anpolymerisierte Schicht durch weiteres Bestrahlen oder thermisch aushärtet und die Form entfernt.-

2. Verwendung der nach Anspruch 1 erhaltenen Hohlkörper als verlorener Kern bei der Herstellung von faserverstärkten Kunststoffhohlkörpern nach dem Wickelverfahren.

3. Verwendung der nach Anspruch 1 erhaltenen Hohlkörper als Gebrauchsgegenstände, z.B. Flaschen, Vasen, oder Schalen.